**Europäisches Patentamt**

**European Patent Office**

**Office européen des brevets**

(19)

(11) Veröffentlichungsnummer : **0 335 187 B1**

(12) **EUROPÄISCHE PATENTSCHRIFT**

(45) Veröffentlichungstag der Patentschrift :
15.05.91 Patentblatt 91/20

(51) Int. Cl.$^5$ : **B65G 69/00**

(21) Anmeldenummer : **89104679.9**

(22) Anmeldetag : **16.03.89**

(54) **Verformbare Dichtung des Spaltes zwischen einer Gebäudeöffnung und einem an diese herangefahrenen Fahrzeug.**

(30) Priorität : 29.03.88 EP 88105043

(43) Veröffentlichungstag der Anmeldung :
04.10.89 Patentblatt 89/40

(45) Bekanntmachung des Hinweises auf die
Patenterteilung :
15.05.91 Patentblatt 91/20

(84) Benannte Vertragsstaaten :
AT BE CH DE ES FR GB GR IT LI LU NL SE

(56) Entgegenhaltungen :
EP-A- 0 069 093
CH-A- 555 969
US-A- 3 665 997

(73) Patentinhaber : **VAN WIJK NEDERLAND B.V.**
**Bouwweg 14**
**NL-8243 PJ Lelystad (NL)**

(72) Erfinder : **Pereira das Dores, Antonio**
**Archipel 36-09**
**NL-8224 HL Lelystad (NL)**

(74) Vertreter : **Beil, Hans Chr., Dr. et al**
**Beil, Wolff und Beil, Rechtsanwälte**
**Adelonstrasse 58 Postfach 80 01 40**
**W-6230 Frankfurt am Main 80 (DE)**

## Beschreibung

Die Erfindung betrifft eine verformbare Dichtung des Spaltes zwischen einer Gebäudeöffnung und einem daran herangefahrenen Fahrzeug, die aus zwei Seitenteilen und einem Oberteil besteht. Jedes dieser Teile besteht aus aufblasbaren Wulsten aus einem luftdichten Material, die sich an das Fahrzeug anlegen.

Eine derartige Dichtung ist aus der europäischen Patentschrift EP-A-69 093 bekannt. Nachteil der dort beschriebenen Dichtung ist, dass die Rückführbewegung in Ruhestellung über Rückführmittel erfolgt, die dem Aufblasen nachgiebig entgegenwirken, um nach Abstellen der Luftzufuhr vom Gebläse die Luft aus den Abdichtelementen auszupressen und damit die Abdichtelemente vom Fahrzeug zu entfernen. Die Rückführelemente für das obere Kissen sind Gewichte und für die Seitenteile Spannelemente und wirken auch beim Aufblasen der Kissen stets der Aufblasbewegung entgegen.

Die Spannung der im allgemeinen aus Gummielementen bestehenden Spannelemente für die Seitenteile nimmt beim Aufblasen stets zu. Aus diesem Grunde legen sich die Wülste im Bereich der Rückführelemente nicht mehr genau an das Fahrzeug an und lassen so Restspalten entstehen. Ausserdem sind bei der bekannten Ausführung auch der Ein- und Ausfahrbereich der Wülste begrenzt und die Einfahrzeit sehr lang.

Die Erfindung hat zum Ziel, diese Nachteile zu beheben. Da das Aufrollen der Kissen zentral über ein in zwei Richtungen wirkendes Antriebselement erfolgt, das unabhängig vom Gebläse die Wulste ein- und ausfährt, stehen die Rückführelemente beim Anlegen der Wulste an das Fahrzeug nicht unter Spannung, was eine optimale Abdichtung gewährleistet.

Durch die Führung des Oberkissens in Laufschienen ist ein V-förmiges Ausknicken beim Anlegen an das Fahrzeug nicht möglich. Dadurch, dass auch die Seitenkissen in einer Schiene hängen, ist auch eine optimale Abdichtung in den Eckpunkten gewährleistet, da sich die Kissen nicht mehr in Fahrzeuglängsrichtung voneinander wegbewegen können.

Jeder Wulst ist mit drei Rückzugelementen ausgerüstet und dadurch ist auch die Bewegung vom LKW weg verbessert.

Die Wülste befinden sich im eingefahrenen Zustand hinter Schürzen und sind so vor Beschädigungen geschützt. Schliesslich ist die optische Ansicht stark verbessert.

Die Auf- und Abwickelvorrichtung ermöglicht eine grössere Reichweite der Wulste ohne nachteilige Auswirkung auf die Qualität der Abdichtung. Die Abmessungen der Fahrzeuge können in einem weiteren Bereich variieren. Da die Kissen durch das Gebläse wieder leergesaugt und zugleich durch den E-Motor hoch- bzw. eingezogen werden, läuft dieser Vorgang sehr schnell ab. Der LKW kann schneller wegfahren.

Anhand der Zeichnungen wird die Erfindung im folgenden näher beschrieben.

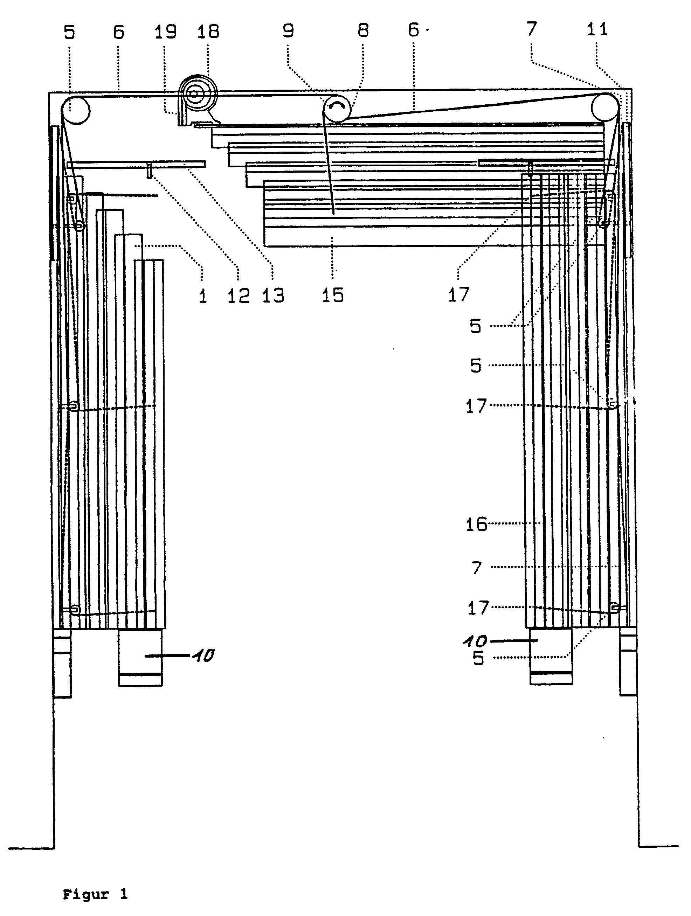

Figur 1 : Gesamtansicht (teilweise weggeschnitten)

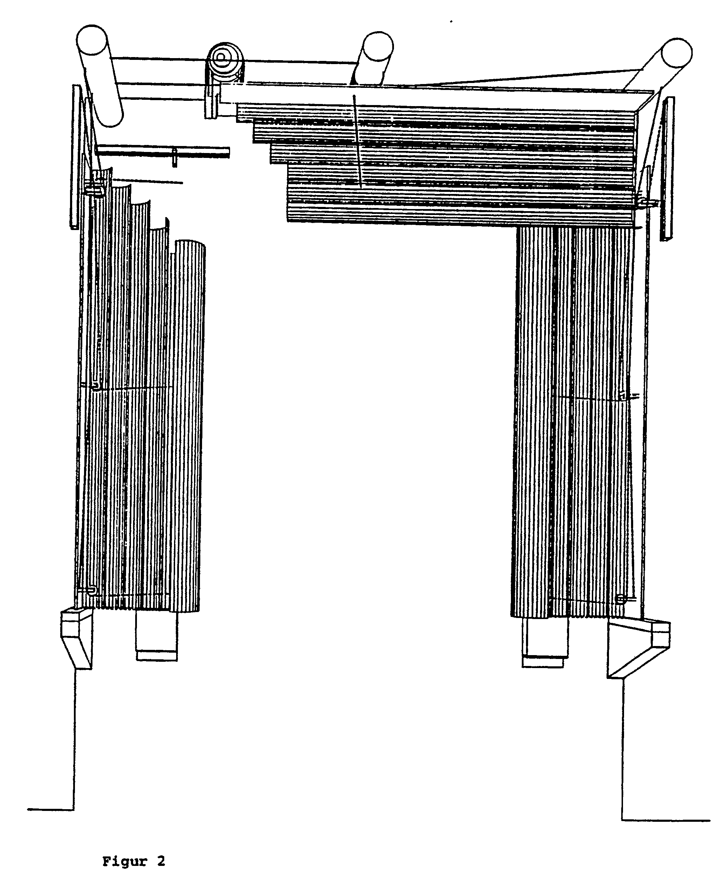

Figur 2 : Perspektivische Darstellung der Fig.1

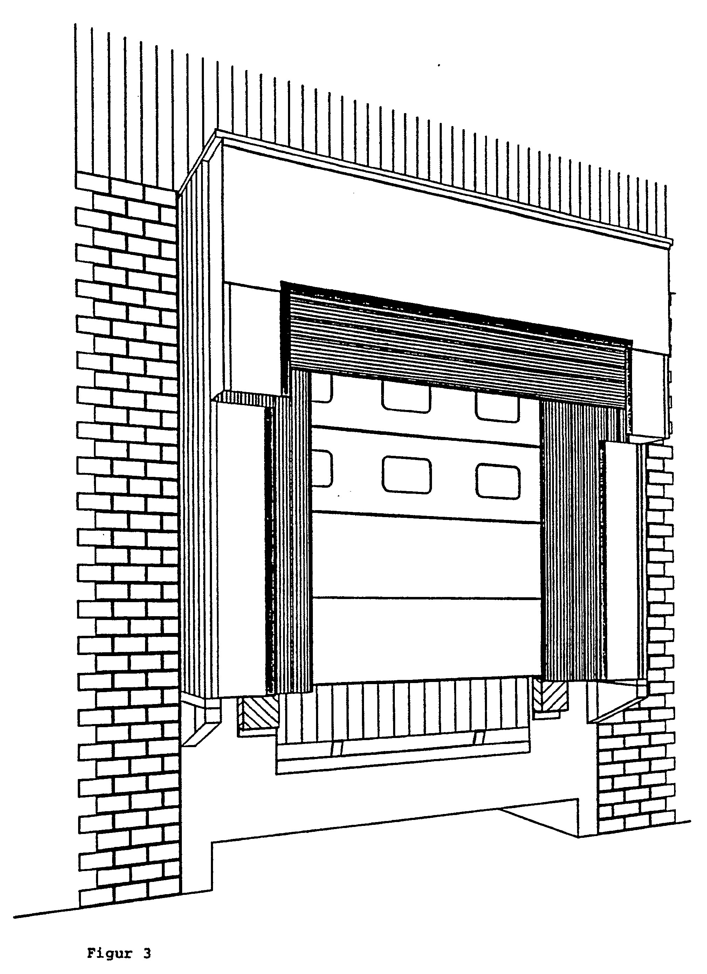

Figur 3 : Gesamtansicht der an der Gebäudeöffnung montierten Vorrichtung

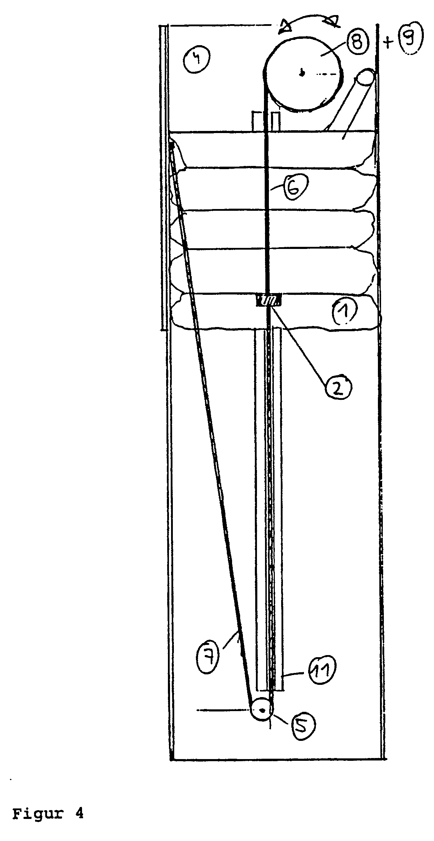

Figur 4 : Seitenansicht des Oberteils in eingefahrener Position.

Figur 5 : Seitenansicht der seitlichen Abdichtung nach einer bevorzugten Ausführungsform.

Die Vorrichtung besteht aus zwei Seitenteilen (16) und einem Oberteil (15), die aus aufblasbaren Wulsten (1) eines luftdichten Materials, beispielsweise aus PVC oder einem gummiähnlichen Material gebildet werden. Das Oberteil läuft links und rechts in einer vertikalen Führungsschiene (11), die beiden Seitenteile hängen an Laufrollen (12) in jeweils einer horizontalen Führungsschiene (13). Die Vorrichtung ist in einem überdachten Vorbau (4) untergebracht, der eine Schürze (14) besitzt.

Der Bewegungsmechanismus für jedes der Seiten- und Oberteile besteht aus einer Seilwickelrolle (8) mit Antriebsvorrichtung (9) und einem über Umlenkrollen (5) laufenden Zugseil (6), das an der Seilwickelrolle (8) und am äusseren Ende der Seitenteile (16) bzw. am unteren Teil des Oberteils (15) befestigt ist. Elastische Zugelemente (7), die bei den Seitenteilen vor dem Verteilungspunkt des Zugseils in 3 Seile angreifen und am Blendrahmen unten angebracht sind und beim Oberteil (15) am Ende des Zugseils angebracht und über eine Umlenkrolle laufend oben an der Blende befestigt sind, sorgen für eine ständige Spannung der Zugseile und verhindern so das Ablaufen der Seile.

Die Zugseile (6) der beiden Seitenteile (16) besitzen vorzugsweise Dehnelemente (17), die in Funktion treten, wenn die Seitenteile (16) eine andere Distanz als das Oberteil (15) ausschieben müssen. Die Dehnelemente (17) sind im ausgefahrenen Zustand nicht gedehnt und gleichen den Wegunterschied zwischen Oberteil und Seitenteilen beim Einfahren aus. An den beiden Zugseilen (6) für das Oberteil (15) sind Mitnahmeelemente (2) befestigt, die das Oberteil beim Einfahren mit nach oben ziehen.

Über ein Gebläse (18) wird die benötigte Luft den Wulsten (1) über Öffnungen (19) zugeführt, über die beim Einfahren die eingeschlossene Luft aus den Wülsten wieder entweichen kann, gegebenenfalls durch Absaugen mittels Gebläse (18).

Im Ruhezustand liegen die Seitenteile (16) an den Wänden des Vorbaus (4) hinter einer seitlichen Schürze an, während das Oberteil (15) hinter der Schürze (14) an vorzugsweise drei Zugseilen (6) hängt, die auf der Seilwickelrolle (8) aufgewickelt sind. Wenn ein Fahrzeug an die an der Gebäudeöffnung angebrachten Puffer (10) herangefahren ist, wird das Gebläse (18) betätigt und über die Öffnungen (19) Luft in die Wülste geblasen, das Oberteil (15) und die beiden Seitenteile (16) bewegen sich, durch den Antrieb (9) betätigt, auf das Fahrzeug zu, wobei die Zugseile (6) von der Seilwickelrolle (8) über die Umlenkrollen (5) abrollen und die Zugelemente (7) sich zusammenziehen. Über einen Endschalter wird dieser Abwickelvorgang immer im voll ausgefahrenen Zustand angehalten, so dass der Luftdruck keinen Widerstand der Dehnelemente (17) und Zugseile (6) zu überwinden braucht, da diese spannungsfrei sind. Dies gewährleistet eine optimale Abdichtung, da sich die Wulste genau an das Fahrzeug anlegen. Das Oberteil (15) und die beiden Seitenteile (16) werden dadurch immer an das Fahrzeug gedrückt und folgen einer sich verändernden Position des Fahrzeuges bei der Be- und Entladung. Durch dieses System wird auch gesichert, dass beide Seitenteile fest am Fahrzeug anliegen, wenn dieses nicht genau in der Mitte der Gebäudeöffnung steht.

Vor dem Wegfahren des Fahrzeuges werden die Zugseile (6) wieder auf die Seilwickelrolle aufgewickelt, das Oberteil (15) und die beiden Seitenteile (16) zurückgefahren, wobei die eingeschlossene Luft vorzugsweise mittels Gebläse (18) aus den Wülsten (1) herausgesaugt wird und gleichzeitig die Zugelemente (7) gedehnt werden. Das Fahrzeug kann von der Gebäudeöffnung wegfahren, ohne dass die Abdichtung an dem Fahrzeug schleift, und dies viel früher als bei bereits bekannten Systemen.

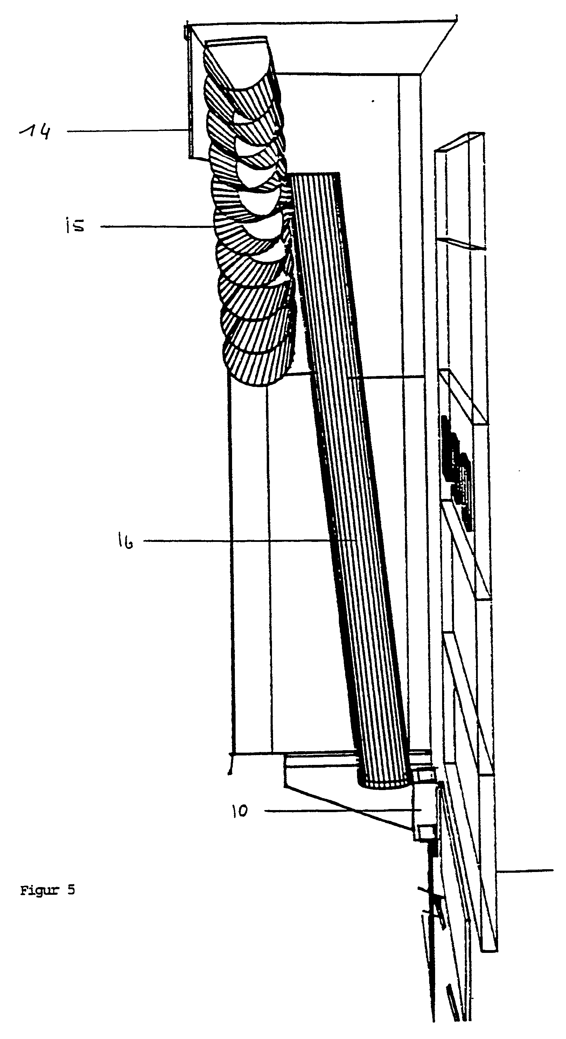

In einer bevorzugten Ausführungsform, die Fig. 5 zeigt, sind die Seitenteile (16) an der Seitenwand des Blendrahmens so angebracht, dass sie unten gegen das Gebäude geneigt sind und vorzugsweise mit ihrem unteren Ende so weit wie möglich an der Gebäudewand anliegen, und wird das Oberteil (15) in unten schräg zur Gebäudewand angeordneten Führungsschienen (11) geführt. Dadurch wird der Raum, der von den Seitenteilen (16), der Seitenwand des Blendrahmens, der Gebäudewand und der Seitenwand des Fahrzeuges gebildet wird und der durch den freien Raum unter dem Fahrzeug mit der Aussenluft in Verbindung steht, was zu erheblicher Zugluft führen kann, nach unten teilweise oder völlig abgeschlossen. Ob die Seitenteile (16) direkt oberhalb oder mehr oder weniger weit unterhalb der regelmässig vorhandenen Puffer (10), die eine Beschädigung der Gebäudewand durch das heranfahrende Fahrzeug verhindern sollen, an der Gebäudewand anliegen, ist nicht entscheidend und wird in erster Linie von den örtlichen Gegebenheiten und der Länge der Seitenteile (16) bestimmt. Neben der Anbringung der Seitenteile (16) in der gezeigten Form an den Seitenwänden des Blendrahmens und der oberen Führung (12, 13) sind für diese bevorzugte Ausführungsform keine weiteren Halterungen oder Führungen der Seitenteile (16) notwendig.

## Ansprüche

1. Verformbare Dichtung des Spaltes zwischen einer Gebäudeöffnung und einem an diese herangefahrenen Fahrzeug, bestehend aus
1. zwei Seitenteilen (16) jeweils bestehend aus
1.1 aufblasbaren Wülsten aus einem luftdichten Material,
1.2 einer oberhalb der Seitenteile horizontal angeordneten Führungsschiene (13)
1.3 einer in dieser Führungsschiene laufenden Rolle (12), an der
1.4 das äusserste Wulstelement des Seitenteils (16) aufgehängt ist
2. einem Oberteil (15), bestehend aus
2.1 aufblasbaren Wülsten aus einem luftdichten Material,
2.2 zwei an beiden Seiten des Oberteils (15) vertikal angeordneten Führungsschienen (11), und
2.3 in diesen Führungsschienen laufenden Führungen, die
2.4 am unteren Wulstelement des Oberteils (15) befestigt sind,
3. einem Bewegungsmechanismus für jedes der Seiten- und Oberteile (15, 16), bestehend aus
3.1 einer Seilwickelrolle (8) mit Antriebsvorrichtung (9)
3.2 einem über Umlenkrollen (5) laufenden Zugseil (6), das an der Seilwickelrolle (8) und am äußeren Ende der Seitenteite (16) bzw. am unteren Wulstelement des Oberteils (15) befestigt ist
3.3 einem an jedem Zugseil angeordneten elastischen Zugelement (7) und
3.4 einer Vorrichtung (18) zum Aufblasen jedes der Seiten- und Oberteile (16, 15).

2. Dichtung nach Anspruch 1, dadurch gekennzeichnet, dass in den Zugseilen der Seitenteile (16) zusätzliche Dehnelemente (17) angeordnet sind.

3. Dichtung nach einem der Ansprüche 1 oder 2, dadurch gekennzeichnet, dass die an den Seilwickelrollen (8) befestigten Zugseile (6) gemeinsam von einer Antriebsvorrichtung (9) bewegt werden, die sich vorzugsweise in einer dieser Seilwickelrollen (8) befindet.

4. Dichtung nach einem der Ansprüche 1 bis 3, dadurch gekennzeichnet, dass die Antriebsvorrichtung (9) ein Elektromotor ist.

5. Dichtung nach einem der Ansprüche 1 bis 4, dadurch gekennzeichnet, dass die elastischen Zugelemente (7) Zugfedern sind.

6. Dichtung nach einem der Ansprüche 1 bis 4, dadurch gekennzeichnet, dass die elastischen Zugelemente (7) Gummiseile sind.

7. Dichtung nach einem der Ansprüche 1 bis 6, dadurch gekennzeichnet, dass die Dehnelemente (17) an den Zugseilen (6) der Seitenteile (16) Zugfedern sind.

8. Dichtung nach einem der Ansprüche 1 bis 6, dadurch gekennzeichnet, dass die Dehnelemente (17) an den Zugseilen (6) der Seitenteile (16) Gummiseile sind.

9. Dichtung nach einem der Ansprüche 1 bis 8, dadurch gekennzeichnet, dass die benötigte Druckluft durch ein Gebläse (18) erzeugt und den Wülsten (1) über die Öffnungen (19) zugeführt wird.

10. Dichtung nach einem der Ansprüche 1 bis 9, dadurch gekennzeichnet, dass beim Einfahren des Oberteils (15) und der beiden Seitenteile (16) mittels Antriebsvorrichtung (9) die eingeschlossene Luft über die Öffnungen (19) durch das Gebläse (18) abgesaugt wird.

11. Dichtung nach einem der Ansprüche 1 bis 10, dadurch gekennzeichnet, dass für jedes Seiten- und Oberteil drei Zugseile (6) vorhanden sind.

12. Dichtung nach einem der Ansprüche 1 bis 10, dadurch gekennzeichnet, dass die Abdichtungsvorrichtung in einem überdachten Vorbau (4) mit einer Schürze (14) und seitlichen Blenden, die die Vorrichtung im eingefahrenen Zustand nach vorne und aussen abschirmen, installiert ist.

13. Dichtung nach einem der Ansprüche 1 bis 12, dadurch gekennzeichnet, dass die Seitenteile (16) und die Führungsschienen (11) des Oberteils (15) mit ihrer Unterseite gegen die Gebäudewand geneigt sind.

14. Dichtung nach Anspruch 13, dadurch gekennzeichnet, dass die Seitenteile (16) mit ihrem unteren Ende an der Gebäudewand anliegen.


## Claims

1. Deformable seal for the gap between an opening in a building and a vehicle drawn up to it, comprising

1. two side parts (16) each comprising

1.1 inflatable pads made of an airtight material,

1.2 a guide rail (13) disposed horizontally above the side parts

1.3 a roller (12) running in said guide rail from which

1.4 the outermost pad element of the side part (16) is suspended

2. an upper part (15) comprising

2.1 inflatable pads made of an airtight material,

2.2 two guide rails (11) disposed vertically on either side of the upper part (15), and

2.3 running in said guide rails guides which

2.4 are fastened to the bottom pad element of the upper part (15),

3. an operating mechanism for each side and upper part (15, 16) comprising

3.1 a cable winding pulley (8) with drive device (9) .

3.2 a traction cable (6) which runs over guide rollers (5) and is fastened to the cable winding pulley (8) and to the outer end of the side parts (16) and to the bottom pad element of the upper part (15)

3.3 an elastic traction element (7) disposed on each traction cable and

3.4 a device (18) for inflating each side and upper part (16, 15).

2. Seal according to claim 1, characterised in that additional expansion elements (17) are disposed in the traction cables of the side parts (16).

3. Seal according to one of claims 1 or 2, characterised in that the traction cables (6) fastened to the cable winding pulleys (8) are jointly moved by a drive device (9) which is preferably located in one of said cable winding pulleys (8).

4. Seal according to one of claims 1 to 3, characterised in that the drive device (9) is an electric motor.

5. Seal according to one of claims 1 to 4, characterised in that the elastic traction elements (7) are tension springs.

6. Seal according to one of claims 1 to 4, characterised in that the elastic traction elements (7) are elastic rubber cables.

7. Seal according to one of claims 1 to 6, characterised in that the expansion elements (17) on the traction cables (6) of the side parts (16) are tension springs.

8. Seal according to one of claims 1 to 6, characterised in that the expansion elements (17) on the traction cables (6) of the side parts (16) are elastic rubber cables.

9. Seal according to one of claims 1 to 8, characterised in that the required compressed air is generated by a fan (18) and is supplied to the pads (1) through the openings (19).

10. Seal according to one of claims 1 to 9, characterised in that, during retraction of the upper part (15) and the two side parts (16) by means of the drive device (9), the enclosed air is extracted through the openings (19) by the fan (18).

11. Seal according to one of claims 1 to 10, characterised in that three traction cables (6) are provided for each side and upper part.

12. Seal according to one of claims 1 to 10, characterised in that the sealing device is installed in a roofed fore-part of a building (4) having a skirt (14) and lateral screens which shield the device in its retracted state at the front and externally.

13. Seal according to one of claims 1 to 12, characterised in that the side parts (16) and the guide rails (11) of the upper part (15) have their bottom side inclined towards the building wall.

14. Seal according to claim 13, characterised in that the side parts (16) lie with their bottom end adjacent to the building wall.


## Revendications

1. Joint déformable pour fermer l'intervalle entre une ouverture d'un bâtiment et un véhicule engagé dans cette ouverture, comprenant

1. deux parties latérales (16) constituées chacune

    1.1 de bourrelets gonflables faits d'un matériau étanche à l'air,

    1.2 d'un rail de guidage (13) monté horizontalement au-dessus des parties latérales et

    1.3 d'un galet (12) circulant dans ce rail de guidage et auquel

    1.4 est suspendu le boudin situé le plus à l'extérieur de la partie latérale (16),

2. une partie supérieure (15) constituée

    2.1 de boudins gonflables faits d'un matériau étanche à l'air,

    2.2 de deux rails de guidage (11) montés verticalement des deux côtés de la partie supérieure (15) et

    2.3 de guides circulant dans ces rails de guidage et qui

    2.4 sont fixés au boudin inférieur de la partie supérieure (15),

3. un mécanisme de manoeuvre pour chacune des parties latérales et supérieure (15, 16), constitué

    3.1 d'une poulie (8) d'enroulement de câble avec un dispositif de commande (9)

    3.2 d'un câble de commande (6) passant sur des poulies de renvoi (5) et fixé d'un côté à la poulie (8) d'enroulement de câble et de l'autre côté à l'extrémité extérieure de la partie latérale (16) ou au boudin inférieur de la partie supérieure (15),

    3.3 d'un élément élastique de traction (7) coordonné à chaque câble de commande et

    3.4 d'un dispositif (18) pour gonfler chacune des parties latérales et supérieure (16, 15).

2. Joint selon la revendication 1, caractérisé en ce que des éléments extensibles (17) supplémentaires sont disposés dans les câbles de commande des parties latérales (16).

3. Joint selon la revendication 1 ou 2, caractérisé en ce que les câbles de commande (6) fixés aux poulies (8) d'enroulement de câbles, sont mus ensemble par un dispositif de commande (9) qui se trouve de préférence dans l'une de ces poulies (8) d'enroulement.

4. Joint selon une des revendications 1 à 3, caractérisé en ce que le dispositif de commande (9) est un moteur électrique.

5. Joint selon une des revendications 1 à 4, caractérisé en ce que les éléments élastiques de traction (7) sont des ressorts de traction.

6. Joint selon une des revendications 1 à 4, caractérisé en ce que les éléments élastiques de traction (7) sont des câbles en caoutchouc.

7. Joint selon une des revendications 1 à 6, caractérisé en ce que les éléments extensibles (17) sur les câbles de commande (6) des parties latérales (16) sont des ressorts de traction.

8. Joint selon une des revendications 1 à 6, caractérisé en ce que les éléments extensibles (17) sur les câbles de commande (6) des parties latérales (16) sont des câbles en caoutchouc.

9. Joint selon une des revendications 1 à 8, caractérisé en ce que l'air comprimé nécessaire est fourni par un ventilateur (18) et est introduit dans les boudins (1) à travers des ouvertures (19).

10. Joint selon une des revendications 1 à 9, caractérisé en ce que, lors de la rétraction de la partie supérieure (15) et des deux parties latérales (16) au moyen du dispositif de commande (9), l'air enfermé est évacué par le ventilateur (18) par aspiration à travers les ouvertures (19).

11. Joint selon une des revendications 1 à 10, caractérisé en ce que trois câbles de commande (6) sont prévus pour chacune des parties latérales et supérieure.

12. Joint selon une des revendications 1 à 10, caractérisé en ce qu'il est installé dans une avancée de bâtiment (4) pourvue d'un toit avec un recouvrement (14) en haut et des recouvrements latéraux qui protègent le joint à l'état rétracté du côté avant et vers l'extérieur.

13. Joint selon une des revendications 1 à 12, caractérisé en ce que les parties latérales (16) et les rails de guidage (11) de la partie supérieure (15) sont inclinés vers la paroi du bâtiment par leur côté inférieur.

14. Joint selon la revendication 13, caractérisé en ce que les parties latérales (16) s'appliquent contre la paroi du bâtiment par leur extrémité inférieure.

Figur 1

Figur 2

Figur 3

Figur 4

Figur 5